# EUROPEAN PATENT APPLICATION

(11) **EP 3 415 060 A1**
(43) Date of publication of application: **19.12.2018**
(21) Application number: 18173621.6
(22) Date of filing: 22.05.2018
(51) Int. Cl.: A47J 37/07, A47L 13/34, B08B 1/00

(54) **CLEANING TOOL FOR CLEANING A DEVICE FOR TREATING FOOD PRODUCTS**

(30) Priority: 08.06.2017 IT 201700063157 U
(71) Applicant: Angelo Po Grandi Cucine - Societa' per Azioni, 41012 Carpi (MO) (IT)
(72) Inventor: CRISTIANI, Corrado, 41124 Modena (IT)
(74) Representative: Crugnola, Pietro

(57) **Abstract**

A cleaning tool (10) is provided for cleaning a device (10) for treating food products, said device (10) comprising an electric resistance (4) that is that is connectable, directly, or by a supply and control apparatus (22), to an electric supply grid, said resistance (4) comprising a plurality of rectilinear resistance portions (7) connected together by curvilinear resistance portions (8).

The tool (10) comprises a body (11), inside which a cavity (12) is obtained, closed below by a bottom (17) of the body (11), and at least one cleaning element (15, 16; 18, 19, 20, 21; 25, 26) configured for being coupled with said rectilinear resistance portions (7) and for removing therefrom residues of food products and/or of condiments and/or of grease.

## Description

The present invention relates to a cleaning tool for cleaning a device for treating food products, so-called "marker", in particular a cleaning tool for a device that is usable for giving the surface of cooked foods with other processes, such as cooking in a pan, steaming cooking or cooking in an oven, the typical appearance and taste of cooking on a grill or a hot plate.

It is known that cooking on a grill or a hot plate is a very common cooking method and is also very popular with the customers of restaurants and cafés.

Nevertheless, cooking on a grill or hot plate has various drawbacks such as, for example, carbonization of the zones of food in direct contact with the grill elements or the surface of the hot plate, which, in addition to detracting from the organoleptic properties of the food, generates toxic substances that are harmful to health, if they are ingested. In addition to that, cooking on the grill or hot plate is not uniform, but is more accentuated in the zones in direct contact with the grill elements or with the surface of the hot plate.

Further, cooking on a grill or hot plate requires the presence for the whole cooking time of an operator to evaluate and check the progress of the cooking and to turn and/or reposition the food product at the right moment in the cooking progress so as to obtain the surface grilling on at least two surfaces of the food product. Even a small error in evaluating the temperatures and/or times at which the food is positioned and cooked on the grill or on the hot plate may run the risk of ruining the product because of excessive or irregular cooking with respect to the desired result for that type of food product.

On the other hand, other types of cooking, for example cooking in a pan or oven, entail fewer risks of overcooking the food product or producing excessive carbonization of the surfaces thereof.

Further cooking in a pan or steaming require less attention and a less constant presence of the operator of the kitchen and cooking in an oven even enables time and manpower to be reduced inasmuch as it is possible to cook, without supervision and also using programmes preset by the operator, with the further advantage of making the desired gastronomic result always the same, constant, uniform and repeatable.

The different foods have different consistency and different types of chemical and physical transformations when they are subjected to contact with very hot outer surfaces. For example grilling of cheeses and vegetables has to occur at different temperatures from meat, which depends in turn on the type, thickness and dimensions of the meat. In order to produce the desired grilling effect it is possible to use devices, so-called "markers", consisting of an electric resistance provided with a grip, suppliable from an electrical network by a supply cable, or by a supply and control apparatus that is connectable to an electrical grid. The electric resistance consists of a series of rectilinear portions connected together by curvilinear portions.

By applying for a short time the electric resistance to the outer surface of a food product to be treated, in the zones of the surface of the product, with which the rectilinear resistance portions come into contact, streaks of a dark colour are formed, which simulate the generated ones during cooking of a food on a grill or a hot plate. The short time of contact of the electric resistance with the surface of the food product does not however permit carbonization to be reached of the zones of said surface that have come into contact with the electric resistance. The food product accordingly takes on the appearance of a food cooked on a grill or on a hot plate, without however the presence of carbonious residues and without alteration of the organoleptic properties, due to excessive exposure to heat.

One drawback of the devices for treating food products so-called "markers", mentioned previously, consists of the fact that the surface of the resistance, above all in the rectilinear portions, when it comes into contact with the surface of the food product to be treated collects particles of product and of possible condiments or grease present on the surface of the product. This makes frequent cleaning of the resistance of the "marker" necessary, which may not be easy and which entails, anyway, loss of time.

One object of the present invention is to provide a tool for cleaning devices for treating food products, so-called "markers", of the aforementioned type, which is convenient and easy to use and enables the surface of the resistance to be cleaned rapidly without unnecessary time losses.

The object of the present invention is achieved with a tool according to claim 1.

Owing to the tool according to the present invention it is possible to obtain effective, simple and rapid cleaning of the surface of the resistance of a "marker" from residues of food product, grease, or condiments that remain sticking to said surface during use of the "marker".

The invention is disclosed below with reference to the attached drawings, in which:
Figure 1 is a perspective view of a device of known type for treating food products, a so-called "marker";
Figure 2 is a perspective view of the cleaning tool according to the present invention;
Figure 3 is a perspective view of the tool of Figure 2 with the device for treating food products in a first cleaning position;
Figure 4 is a perspective view of the tool of Figure 2 with the device for treating food products in a second cleaning position;
Figure 5 is a view of a supply and control apparatus of the device for treating food products, into which the tool according to the invention is integratable;
Figure 6 is a view of the supply and control apparatus of Figure 5, into which the tool according to the present invention has been integrated;
Figure 7 is a raised view of a cleaning accessory with which the cleaning tool according to the present invention can be equipped;
Figure 8 is a perspective view of the cleaning accessory of Figure 7.

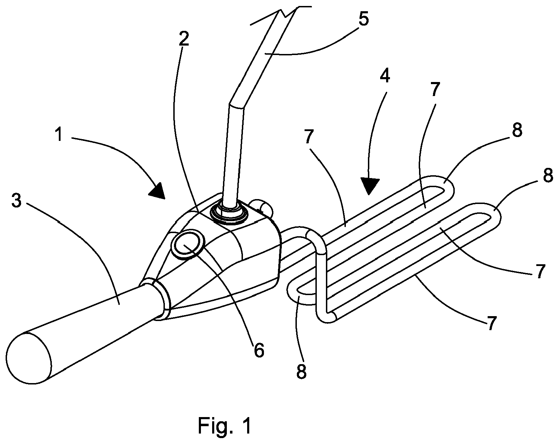

In Figure 1 a device 1 for treating food products, so-called "marker", is illustrated, that comprises a body 2, equipped with a grip 3, to which an electric resistance 4 is fixed that is supplied by a supply cable 5 that is connectable to an electric supply grid, or to a supply and control apparatus that is connectable to the electrical grid. The resistance 4 consists of a plurality of rectilinear resistance portions 7 connected by curvilinear resistance portions 8. On the body 2 a switch 6 is provided that is used to enable, disable and/or adjust the electric supply of the resistance 4

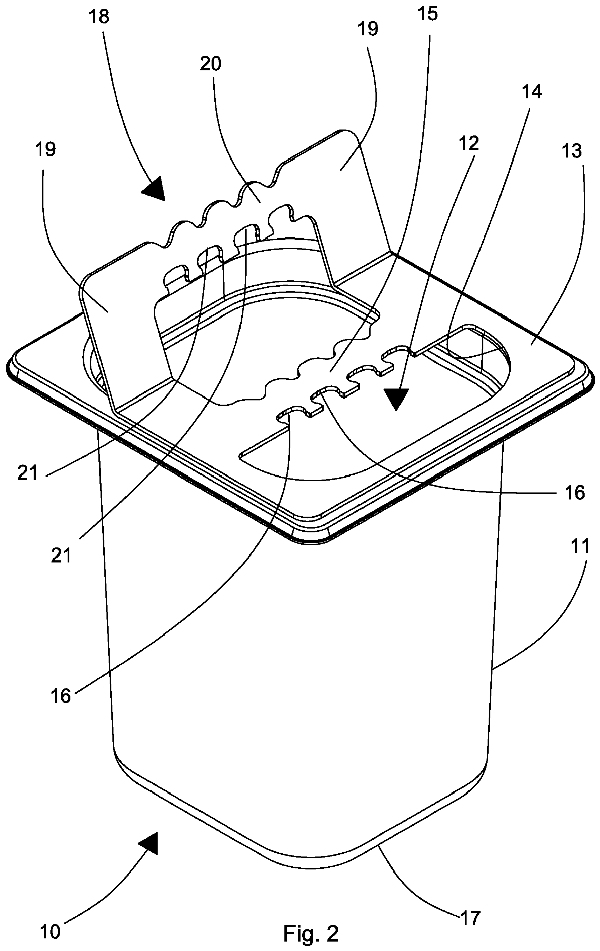

In Figure 2 a tool 10 according to the invention is illustrated that comprises a body 11 inside which a cavity 12 is obtained, that is closed below by a bottom 17 of the body 11, into which the resistance 4 of the device 1 for treating food products can be inserted, as will be explained below. Above the cavity 12, a cover 13 can be arranged, equipped with an opening 14 through which the resistance 4 of the device 1 for treating food products can be inserted into the cavity 12.

In one constructional version the cover 13 can comprise cleaning elements 15, 16; 18, 19, 20, 21 configured so as to couple with the rectilinear resistance portions 7 and remove therefrom residues of food products and/or of condiments and/or of grease.

In this version the cover 13 is equipped with a first cleaning element 15, 16 comprising a crosspiece 15 provided with a plurality of recesses 16 having a shape, dimensions and distances between centres that are such as to enable the rectilinear portions 7 of the resistance 4 to be inserted into the recesses. The number of the recesses 16 is at least equal to the number of the rectilinear portions 7 of the resistance 4.

The cover 13 is further equipped with a second cleaning element 18, 19, 20, 21 comprising a protruding element 18 in the form of a portal, connected to a cover 13 and tilted in relation thereto. The protruding element 18 comprising two uprights 19, interconnected by a further crosspiece 20. On the part of the further crosspiece 20 facing the cover 13 a plurality of further recesses 21 is obtained, which are identical to the recesses 16 and which also have a shape, dimensions and distances that are such as to enable the rectilinear portions 7 of the resistance 4 to be inserted therein. The number of the further recesses 21 is at least equal to the number of the rectilinear portions 7 of the resistance 4.

The element 18 in the form of a portal can be arranged perpendicularly to the cover 13, or tilted with respect thereto by an angle of tilt comprised between about 45° and 90°, preferably between about 60° and 90°.

The cover 13 and the protruding element 18 in the form of a portal are made of metal, preferably steel. The body 11 of the tool 10 can also be made of metal, but can also be made of plastics, or other suitable materials.

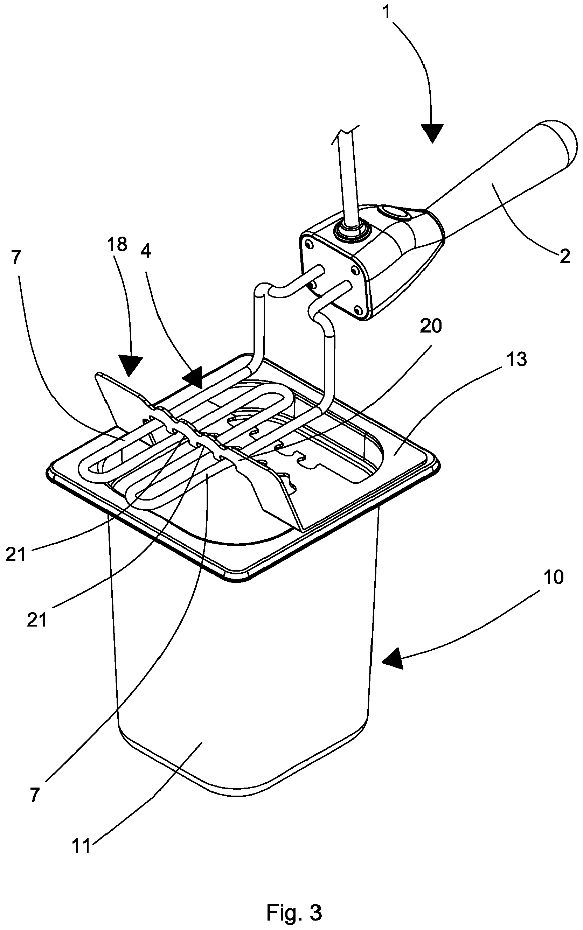

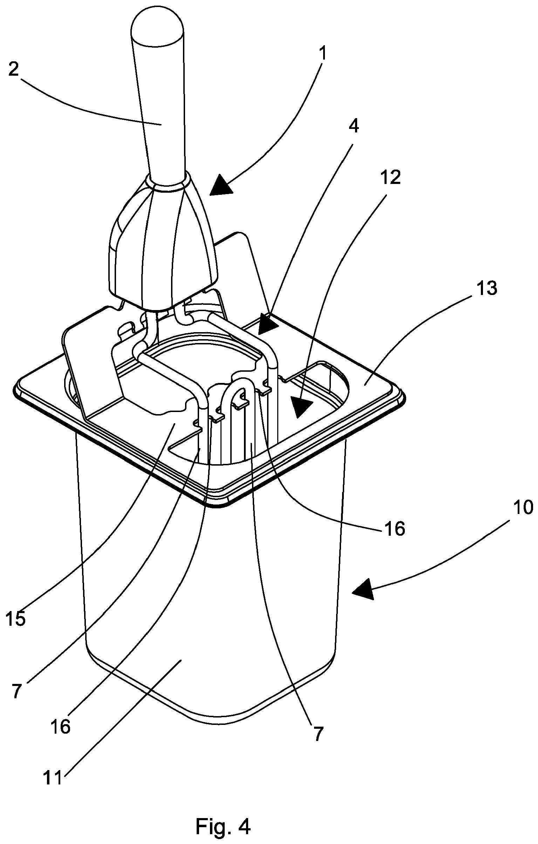

Using the tool according to the present invention is illustrated in Figures 3 and 4.

In Figure 3 a first mode of use of the tool according to the present invention is illustrated.

A user, by gripping, by the grip 2, the device 1 for treating food products inserts the rectilinear portions 7 of the resistance 4 inside the further recesses 21 of the further crosspiece 20 of the protruding element 18 in the form of a portal. By moving the device 1 backwards and forwards and maintaining the rectilinear portions 7 of the resistance 4 in contact with the surface of the further recesses 21, it is possible to remove possible residues of food product, condiments or grease from a half of the surface of the rectilinear portions 7 of the resistance 4, owing to the rubbing between the surface of the rectilinear portions 7 and the surface of the further recesses 21. Subsequently, by overturning the device 1 and repeating the operation disclosed above it is possible to complete the cleaning of the rectilinear portions of the resistance 4. The particles of food product, condiments, or grease removed from the surface of the resistance 4 fall inside the body 11 of the tool 10, without there being any risk that they may be dispersed in the surrounding environment.

In Figure 4 a second use mode is illustrated of the tool 10 according to the present invention.

In this second use mode, a user, by gripping, by the grip 2, the device 1 for treating food products, inserts the rectilinear portions 7 of the resistance 4 inside the recesses 16 of the crosspiece 15 of the cover 13, so that the resistance 4 is arranged substantially vertically and, mostly, inside the cavity 12 of the body 11. By moving the device 1 upwards and downwards and maintaining the rectilinear portions 7 of the resistance 4 in contact with the surface of the recesses 16, it is possible to remove possible residues of food product, condiments or grease from a half of the surface of the rectilinear portions 7 of the resistance 4, owing to the rubbing between the surface of the rectilinear portions 7 and the surface of the recesses 16. Subsequently, by rotating the device 1 by 180° and repeating the operation disclosed above it is possible to complete the cleaning of the rectilinear portions 7 of the resistance 4. The particles of food product, condiments, or grease removed from the surface of the resistance 4 fall inside the body 11 of the tool 10, without there being any risk that they may be dispersed in the surrounding environment.

The cavity 12 can be filled with water, or with a solution of water and vinegar, or with a detergent substance that is compatible with food products, to immerse the resistance 4 therein to facilitate the detachment of the particles of food products, condiments or grease, from the resistance 4 during cleaning operations.

When the device 1 is not in use, it can be left resting on the cover 13, or with the resistance 4 inserted into the cavity 12, as shown in Figure 4.

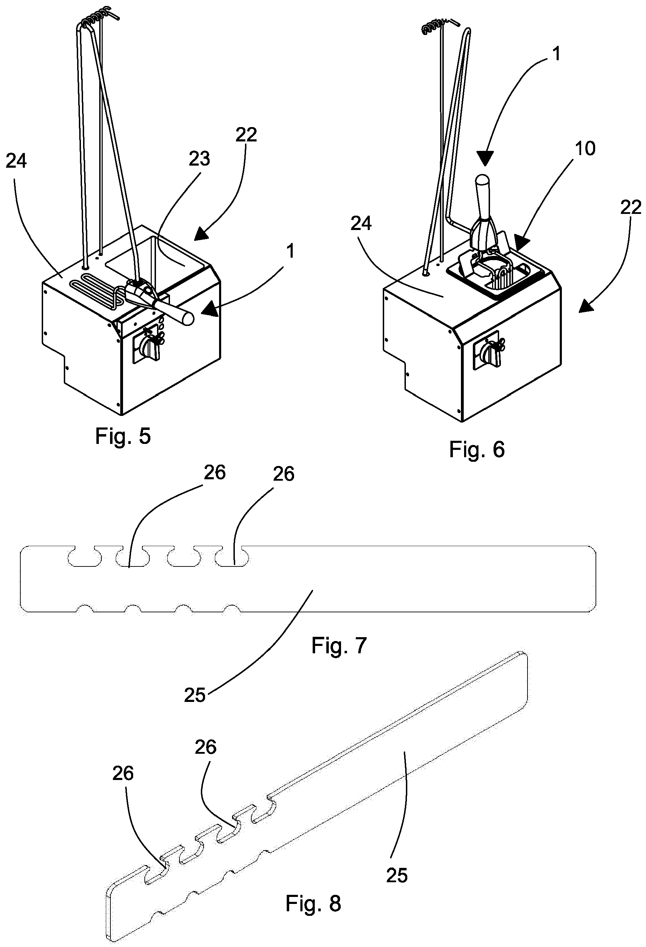

In Figure 5, it is illustrated how the tool 10 according to the present invention can be combined with a supply and control apparatus 22 to which the treatment device 1 for treating food products is connected and which supplies and adjusts the supply of the electric resistance 4. The supply and control apparatus is equipped with a seat 23 having a shape and dimensions such as to receive internally the cleaning tool 10 according to the present invention.

Figure 6 illustrates the cleaning tool 10 inserted into the seat 23 of the supply and control apparatus 22.

The supply and control apparatus can be equipped with a support plane 24 on which a user can rest the device 1 for treating food products, when not in use.

In Figures 7 and 8 a third cleaning element 25 is illustrated that can be comprised in the cleaning tool 10 according to the present invention. The third cleaning element is separated from the body 11 and from the cover 13 of the cleaning tool 10 and can be used for cleaning the resistance 4 instead of the first cleaning element 15, 16 or of the second cleaning element 18, 19, 20, 21. The third cleaning element 25 has the shape of a slat on one side of which a plurality of still further recesses 26 is obtained, which are identical to the recesses 16 and to the further recesses 21. The still further recesses 26 also have a shape, dimensions and distances that are such as to enable the rectilinear portions 7 of the resistance 4 to be inserted therein. The number of the still further recesses 26 is at least equal to the number of the rectilinear portions 7 of the resistance 4.

In order to clean the resistance 4 using the third cleaning accessory 25, a user, after gripping, by the gripper 2, the device 1 for treating food products, applies the third cleaning accessory to the rectilinear portions 7 of the resistance 4, such that the latter are inserted into the latter in the still further recesses 26. By moving the third cleaning element along the rectilinear portions 7 of the resistance 4, so that the surface of the still further recesses 26 remains in contact with the surface of the rectilinear portions 7, it is possible to remove possible residues of food product, condiments or grease from the surface of the rectilinear portions 7 of the resistance 4, owing to the rubbing between the surface of the rectilinear portions 7 and the surface of the still further recesses 26.

It is understood that the features of the cleaning tool that are disclosed and illustrated are not usable only in the combination indicated each time but also in different combinations, or alone, without falling outside the scope of the present invention.

## Claims

1. Cleaning tool (10) for cleaning a device (1) for treating food products, said device (1) comprising an electric resistance (4) that is connectable, directly, or by a supply and control apparatus (22), to an electric supply grid, said resistance (4) comprising a plurality of rectilinear resistance portions (7) connected together by curvilinear resistance portions (8), **characterized in that** it comprises a body (11), inside which a cavity (12) is obtained, closed below by a bottom (17) of the body (11), and at least one cleaning element (15, 16; 18, 19, 20, 21; 25, 26) configured for being coupled with said rectilinear resistance portions (7) and for removing therefrom residues of food products and/or of condiments and/or of grease.

2. Tool (10) according to claim 1, further comprising a cover (13) equipped with an opening (14) communicating with said cavity (12), when the cover (13) is fixed to the body (11).

3. Tool (10) according to claim 2, wherein said cover (13) comprises a first cleaning element (15, 16).

4. Tool (10) according to claim 3, wherein said first cleaning element (15, 16) comprises a crosspiece (15) of said cover (13) provided with a plurality of recesses (16) having a shape, dimensions and distances between centres that are such as to enable the rectilinear resistance portions (7) to be inserted therein.

5. Tool (10) according to claim 4, wherein said crosspiece (15) comprises a number of recesses (16) that is at least equal to the number of rectilinear resistance portions (7).

6. Tool (10) according to any one of claims 2 to 5, wherein said cover (13) comprises a second cleaning element (18, 19, 20, 21).

7. Tool (10) according to claim 6, wherein said second cleaning element (18, 19, 20, 21) comprises a protruding element (18) connected to said cover (13) and tilted in relation thereto, said protruding element (18) comprising two uprights (19) interconnected by a further crosspiece (20), on a part of the further crosspiece (20) facing the cover (13) there being obtained a plurality of further recesses (21) having a shape, dimensions and distances between centres that are such as to enable the rectilinear resistance portions (7) to be inserted into the recesses.

8. Tool (10) according to claim 7, wherein said crosspiece (20) comprises a number of recesses (16) that is at least equal to the number of rectilinear resistance portions (7).

9. Tool (10) according to claim 7, or 8, wherein said protruding element (18) is tilted with respect to said cover by an angle of tilt comprised between 45° and 90°, preferably comprised between 60° and 90°, still more preferably equal to 90°.

10. Tool (10) according to any preceding claim, wherein said cover (13) is made of metal, preferably of steel.

11. Tool (10) according to any preceding claim, wherein said body (11) is made of metal, or of plastics or other materials.

12. Tool (10) according to any preceding claim, **characterized in that** it is integratable into a supply and control apparatus (22) configured for supplying the electric resistance (4) of the device (1) for treating food products, and for adjusting the electric supply of the resistance (4).

13. Tool (10) according to any preceding claim, wherein said cavity (12) is filled with water, or with a solution of water and vinegar, or with a detergent substance that is compatible with food products.

14. Tool (10) according to any preceding claim, further comprising a third cleaning element (25, 26) separated from said body (11) and from said cover (13), said third cleaning element (25) having the shape of a slat on a side of which a plurality of still further recesses (26) is obtained having a shape, dimensions and distances between centres that are such as to enable the rectilinear resistance portions (7) to be inserted therein.

15. Tool (10) according to claim 14, wherein the number of the still further recesses (26) is at least equal to the number of the rectilinear resistance portions (7).
